Europäisches Patentamt

European Patent Office

Office européen des brevets

(11) Publication number: **0 274 420 B1**

## EUROPEAN PATENT SPECIFICATION

(45) Date of publication of patent specification: **07.10.92**

(51) Int. Cl.⁵: **G11B 21/12**, G11B 21/08, G11B 21/02

(21) Application number: **88300050.7**

(22) Date of filing: **05.01.88**

(54) Optical-disk driving apparatus.

(30) Priority: **07.01.87 JP 2291/87**

(43) Date of publication of application:
**13.07.88 Bulletin 88/28**

(45) Publication of the grant of the patent:
**07.10.92 Bulletin 92/41**

(84) Designated Contracting States:
**DE FR GB**

(56) References cited:
**EP-A- 0 209 853**

**PATENT ABSTRACTS OF JAPAN, unexamined applications, P field, vol. 8, no. 31, 9 February 1984, THE PATENT OFFICE JAPANESE GOVERNMENT, page 106 P 253**

**PATENT ABSTRACTS OF JAPAN, unexamined applications, P field, vol. 7, no. 282, 16 December 1983, THE PATENT OFFICE JAPANESE GOVERNMENT, page 54 P 243**

**PATENT ABSTRACTS OF JAPAN, unexamined applications, P field, vol. 6, no. 13, 26 January 1982, THE PATENT OFFICE JAPA-**

**NESE GOVERNMENT, page 108 P 99**

(73) Proprietor: **MITSUBISHI DENKI KABUSHIKI KAISHA**
**2-3, Marunouchi 2-chome Chiyoda-ku Tokyo 100(JP)**

(72) Inventor: **Nakatsu, Keiji Itami Seisakusho Mitsubishi Denki**
**Kabushiki Kaisha 1-1, Tsukaguchi Hon-machi 8-chome**
**Amagasaki City Hyogo Prefecture(JP)**

(74) Representative: **Hackett, Sean James et al Marks & Clerk 57-60 Lincoln's Inn Fields London WC2A 3LS(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

This invention relates to an optical-disk driving apparatus in which information is recorded or reproduced by optical means while a disk-shaped record carrier is being rotated, and more particularly to the control system of the apparatus.

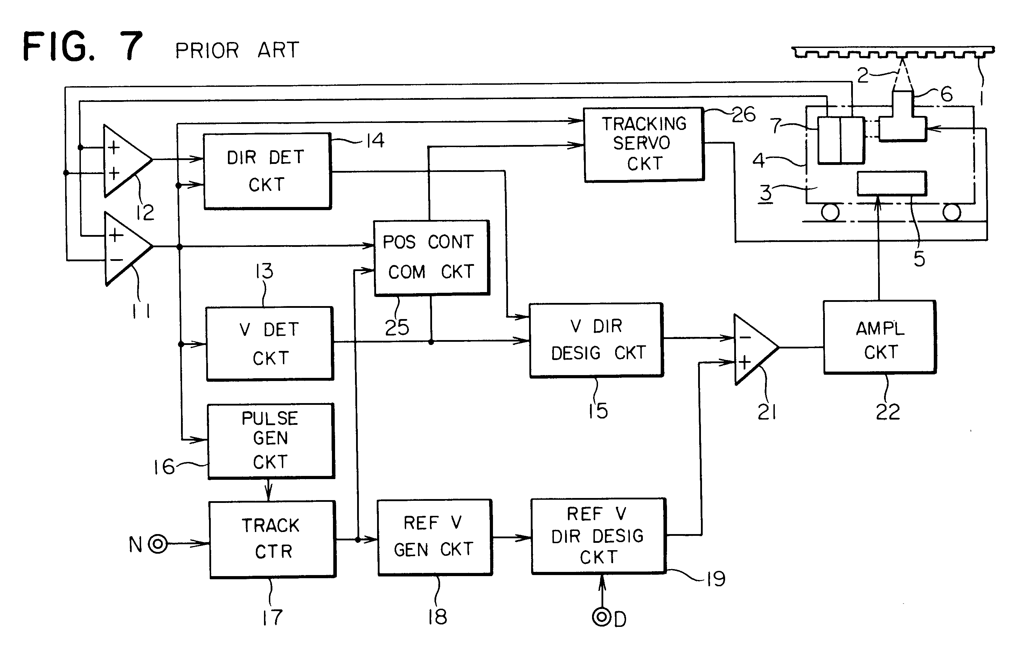

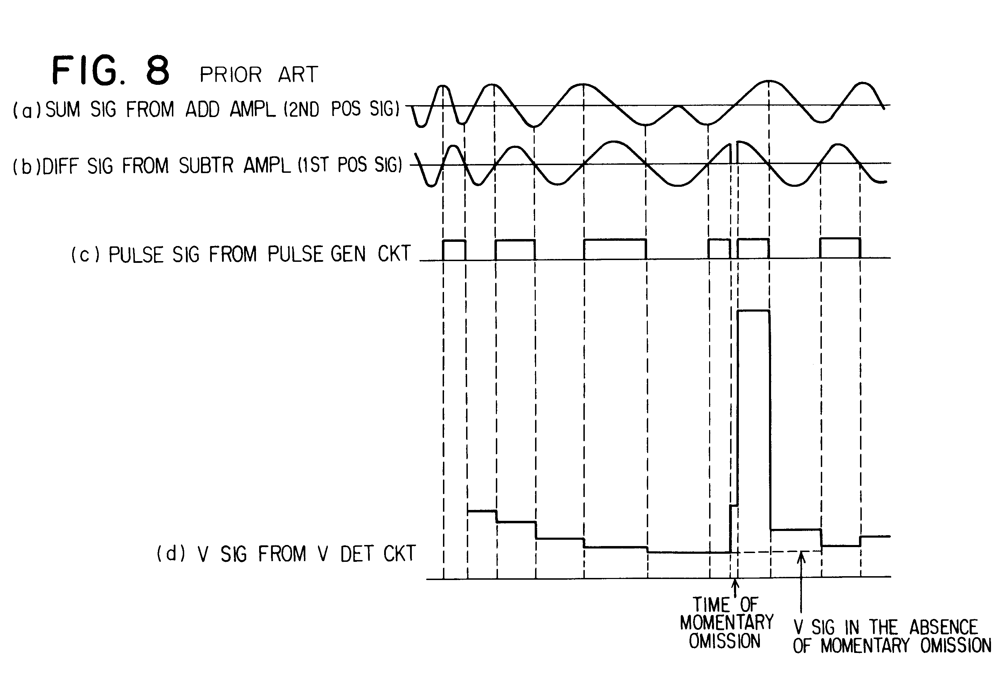

Figure 7 is a block diagram showing the control system of a prior-art optical-disk driving apparatus which is similar to an apparatus disclosed in the official gazette of published Japanese patent specification number 63010324 by way of example, while Figure 8 is a diagram of the signal waveform of a velocity detection circuit which detects a velocity signal when the spot of a light beam traverses the track of an optical disk. Referring to Figure 7, numeral 1 indicates an optical disk as a record carrier in which information is to be recorded or has been recorded on tracks provided to be concentric or spiral at predetermined intervals, numeral 2 a light beam which is a medium for transmitting information to or from the optical disk, numeral 3 an optical head, numeral 4 the carriage of the optical head, and numeral 5 a linear actuator which drives the carriage to move the spot of the light beam 2 in the direction of traversing the tracks of the optical disk 1. Shown at numeral 6 is a tracking actuator which is mounted on the carriage 4. The tracking actuator 6 is furnished with a condensing lens for forming the spot of the light beam 2 on the tracks of the optical disk 1, and is turnable in the moving direction of the linear actuator 5. It is so constructed that the spot of the light beam 2 covers the tracks of the optical disk 1 in a predetermined number. Numeral 7 denotes a bisected photosensor unit by which the quantity of the reflected light of the light beam 2 from the optical disk 1 is converted into an electric signal that is delivered as an output. The sensor of this photosensor unit consists of two parts, and the electric signal which corresponds to the quantity of the reflected light of the light beam 2 falling on each of the sensor parts is output from the sensor part. A subtractive amplifier 11 receives the electric signals delivered from the respective sensor parts of the bisected photosensor unit 7 and executes subtractive amplification, to produce a difference signal corresponding to the movement of the spot of the light beam 2 across the tracks of the optical disk 1. An additive amplifier 12 receives the electric signals delivered from the respective sensor parts of the bisected photosensor unit 7 and executes additive amplification, to produce a sum signal corresponding to the movement of the spot of the light beam 2 across the tracks of the optical disk 1. A velocity detection circuit 13 detects a velocity signal at the time when the spot of the light beam 2 traverses the tracks of the optical disk 1, on the basis of the difference signal produced by the subtractive amplifier 11. A direction detection circuit 14 detects a direction signal indicative of a direction in which the spot of the light beam 2 moves, on the basis of the difference signal produced by the subtractive amplifier 11 and the sum signal produced by the additive amplifier 12 and in view of the phasic relationship of the waveforms of the respective signals. Numeral 15 denotes a velocity direction designation circuit, by which the direction signal delivered from the direction detection circuit 14 is designated to the velocity signal delivered from the velocity detection circuit 13, the resulting signal being provided as an output. On the basis of the difference signal produced by the subtractive amplifier 11, a pulse generator circuit 16 generates a pulse signal each time the spot of the light beam 2 traverses the track of the optical disk 1. A track counter 17 counts the number of remaining tracks in which the spot of the light beam 2 is to traverse the tracks of the optical disk 1, in accordance with a signal corresponding to the number N of tracks to be accessed up to a target track as is applied from outside and the pulse signals delivered from the pulse generator circuit 15, and it provides the count signal as an output. Shown at numeral 18 is a reference velocity generator circuit, which receives the count signal delivered from the track counter 17. At first, the reference velocity generator circuit 18 determines and stores a reference velocity pattern corresponding to the number of the remaining tracks, namely, the number of the tracks to be accessed. It delivers reference velocity signals successively as it receives the count signals from the track counter 17 corresponding to the gradual decrease of the number of the remaining tracks. A reference velocity direction designation circuit 19 designates a direction signal D indicative of the moving direction of the spot of the light beam 2 as is applied from outside, to the reference velocity signal delivered from the reference velocity generator circuit 18, and it provides the resulting signal as an output. A velocity error detection circuit 21 receives the velocity signal of the designated direction delivered from the velocity direction designation circuit 15 and the reference velocity signal of the designated direction delivered from the reference velocity direction designation circuit 19, and it compares them to provide a velocity error signal. Numeral 22 represents an amplifier circuit which amplifies the velocity error signal delivered from the velocity error detection circuit 21 and controls the velocity of the linear actuator 5. Numeral 25 represents a position control command circuit, which receives the difference signal from the subtractive amplifier 11, the velocity signal from the velocity detection circuit 13 and the count signal from the track counter 17 and produces a position control command signal when the velocity of the spot of the light beam 2 has decreased to be lower than a predetermined velocity at the predetermined track of the optical disk 1 before the target track thereof. Numeral 26 indicates a tracking servo circuit, which receives the difference signal from the subtractive amplifier 11 and the position control command signal from the position control command circuit 25 and positions the spot of the light beam 2 to the target track of the optical disk 1 through the position control of the tracking actuator 6.

The prior-art optical-disk driving apparatus is constructed as described above, and the operation thereof will now be described. Track access controls for positioning the spot of the light beam 2 to the target track of the optical disk 1 include a velocity control mode wherein the carriage 4 is driven by the linear actuator 5, to move the spot of the light beam 2 in the direction of traversing the tracks of the optical disk 1, and a position control mode wherein when the spot of the light beam 2 has decelerated below the predetermined velocity at the predetermined track of the optical disk 1, the tracking actuator 6 is controlled to be stopped in the state in which the center of the spot of the light beam 2 and that of the target track are in agreement.

First, in the velocity control mode, the signal corresponding to the number of tracks to be accessed (N) is externally applied to the track counter 17. Since the track counter 17 has no pulse signal from the pulse generator circuit 16 at first, it regards the applied number of tracks to be accessed (N) as the number of remaining tracks and delivers the count signal corresponding thereto. The reference velocity generator circuit 18 receives this count signal to determine and store the reference velocity pattern in advance, and it delivers the reference velocity signals successively in accordance with the numbers of remaining tracks from the track counter 17. The reference velocity direction designation circuit 19 designates the externally-applied direction signal D indicative of the moving direction of the spot of the light beam 2 to the reference velocity signal, and it delivers the resulting signal. This reference velocity signal with the direction designated and the velocity signal of the designated direction delivered from the velocity direction designation circuit 15 are applied to and compared by the velocity error detection circuit 21, the velocity error signal of which is amplified by the amplifier circuit 22 so as to control the moving velocity of the linear actuator 5. In accordance with the reference velocity pattern, the linear actuator 5, the linear actuator 5 accelerates till a predetermined number of tracks and thereafter becomes a constant velocity, and it decelerates when a predetermined number of tracks has been reached. Owing to the velocity control of the linear actuator 5, the spot of the light beam 2 traverses the tracks of the optical disk 1 and moves to the target track. On this occasion, when the track is traversed, the quantity of the reflected light of the light beam 2 from the optical disk 1 changes. The sensor of the bisected photosensor unit 7 consists of the two parts, and when the quantities of the reflected light of the light beam 2 impinging on the respective sensor parts have changed, these sensor parts convert the changes of the light quantities into the electric signals and deliver the signals. The subtractive amplifier 11 and the additive amplifier 12 receive the electric signals from both the sensor parts of the bisected photosensor unit 7, and they deliver the difference signal (Fig. 8(b)) and the sum signal (Fig. 8(a)) respectively. The periods of the difference signal and the sum signal are determined by the velocity at which the spot of the light beam 2 moves across the tracks of the optical disk 1. Besides, in the waveform of the difference signal, the zero point of every cycle indicates that the center of the track of the optical disk 1 has agreed with the center of the spot of the light beam 2. The velocity detection circuit 13 receives the difference signal delivered from the subtractive amplifier 11, and it detects the velocity signal (Fig. 8(d)) from the period thereof and delivers this velocity signal. The direction detection circuit 14 receives the difference signal from the subtractive amplifier 11 and the sum signal from the additive amplifier 12, and delivers the direction signal indicative of the moving direction of the spot of the light beam 2 on the basis of the phasic relationship of the waveforms of both the signals. Besides, in the velocity direction designation circuit 15, the direction signal delivered from the direction detection circuit 14 is designated to the velocity signal delivered from the velocity detection circuit 13. In addition, the pulse generator circuit 16 receives the difference signal (Fig. 8(b)) delivered from the subtractive amplifier 11 and generates the pulse signal of square wave (Fig. 8-(c)) at the zero points of every cycle of the difference signal waveform as a signal indicating that the spot of the light beam 2 has traversed the track. The track counter 17 receives such pulse signals and successively subtracts them from the externally-applied signal corresponding to the number of tracks to be accessed (N), whereby it counts the numbers of remaining tracks to be traversed by the spot of the light beam 2 and delivers the count signals. The reference velocity generator circuit 18 receives the count signals, and successively delivers the reference velocity signals in accordance with the reference velocity pattern determined and stored at first. In the reference velocity direction designation circuit 19, the externally-applied direction signals D indicative of the directions in which the spot of the light beam 2 is to move are designated to the reference velocity signals, the resulting signals being delivered. The velocity error detection signal 21 compares the velocity signal of the designated direction from the velocity direction designation circuit 15 and the reference velocity signal of the designated direction from the reference velocity direction designation circuit 19, and detects and delivers the velocity error signal. The velocity error signal is amplified by the amplifier circuit 22, to control the subsequent moving velocity of the linear actuator 5. The position control command circuit 25 receives the difference signal from the subtractive amplifier 11, the velocity signal from the velocity detection circuit 13 and the count signal from the track counter 17, and if the moving velocity of the spot of the light beam 2 is lower than the predetermined velocity when the spot has come to the predetermined track before the target track, for example, one track before the same, the position control command circuit 25 produces the position control command signal, whereupon the velocity control mode shifts to the position control mode.

Further, in the position control mode, the tracking servo circuit 26 receives the position control command signal from the position control command circuit 25 and the difference signal from the subtractive amplifier 11, and it produces the tracking signal while viewing the phase of the difference signal waveform from the subtractive amplifier 11. Thus, the tracking actuator 6 is controlled and is stopped with the center of the spot of the light beam 2 held in agreement with the center of the target track, to finish the so-called "track pull-in." Thereafter, information is recorded or reproduced while the spot of the light beam 2 is following up the target track of the rotating optical disk 1.

With the prior-art optical-disk driving apparatus constructed and operated as described above, in a case where information is recorded in the form of a pit on the track or where there is a defect on the track or between the tracks, the quantity of light of the light beam 2 to be reflected from the corresponding part becomes null for a moment when the spot of the light beam 2 traverses the track or tracks of the optical disk 1, so that intermittent electric signals are delivered from the respective sensor parts of the bisected photosensor unit 7. Upon receiving the intermittent electric signals, the subtractive amplifier 11 and the additive amplifier 12 produce the difference signal having a momentary omission and the sum signal as respectively shown in Figs. 8(b) and 8(a) by way of example. When the difference signal having the momentary omission enters the pulse generator circuit 16, the number of the pulse signals to be delivered to the track counter 17 increases, and an erroneous number of remaining tracks is counted (Fig. 8(c)), and when it enters the velocity detection circuit 13, an erroneous velocity signal is detected (Fig. 8(d)) and is delivered. Therefore, the prior art has had such a problem as lengthening in a track access time required for positioning the spot of the light beam 2 to the target track of the optical disk 1.

**Summary of the Invention:**

This invention has been made in order to solve the problem as mentioned above, and has for its object to provide an optical-disk driving apparatus in which, even in a case where due to information recorded in the form of a pit on a track or due to a defect on a track or between tracks, a difference signal and a sum signal having momentary omissions are respectively delivered from a subtractive amplifier and an additive amplifier when the spot of a light beam traverses the track or tracks of an optical disk, the number of remaining tracks is correctly counted, and a velocity signal is detected more precisely, so that the spot of the light beam can be efficiently positioned to the target track of the optical disk.

Thus the present invention provides a control system for an optical-disk drive apparatus, the system comprising means for forming a spot of light on an optical disk, means for generating electrical signals in dependence upon light reflected from the optical disk, means for producing a position signal indicative of the position of the spot in relation to tracks of the optical disk, means for adjusting the position of the spot in dependence upon the position signal and a reference signal, and means for generating a single pulse signal representative of the presence of a track, wherein waveshaping means is provided, comprising means

a) to produce, during one half cycle of the position signal, a shift pulse starting either a predetermined delay period (T) after the beginning of the one half cycle or a predetermined delay period after any momentary omission which occurs in the predetermined delay period from the beginning of the one half cycle, said shift pulse ending at the end of the one half cycle;

b) to produce an inverted shift pulse starting at the end of the predetermined delay period from the beginning of the next half cycle following said one half cycle, and ending at the end of the next half cycle; and

c) to produce said shaped pulse position signals respectively starting from the beginning of said shift pulse and ending at the beginning of said inverted shift pulse, regardless of any momentary omission which occurs in the position signal during the one half cycle.

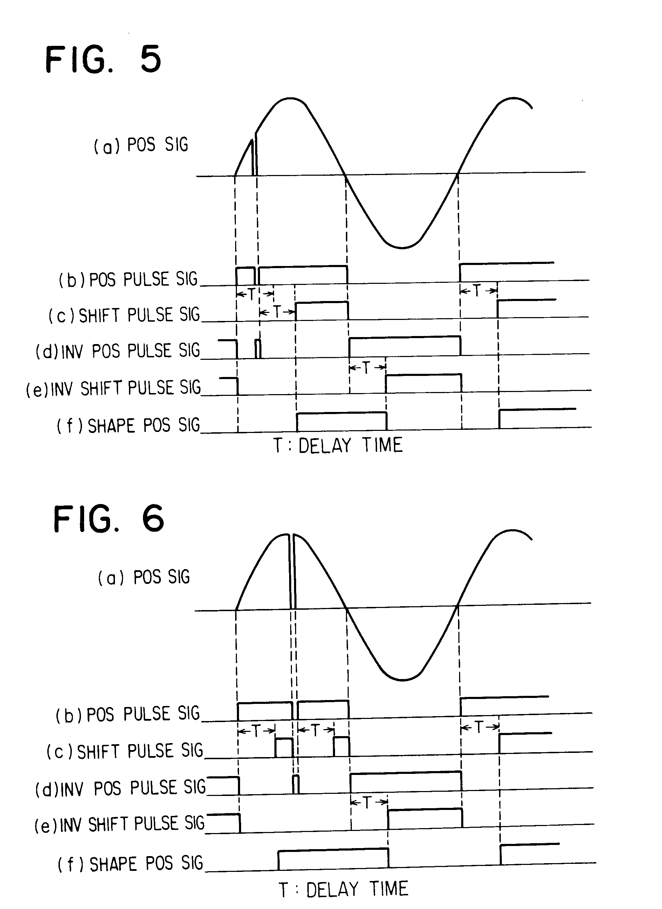

Reference herein to the shift pulse which starts a predetermined delay period (T) after the beginning of the one half cycle and ends at the end of the one half cycle includes the embodiment described hereinafter with reference to Figure 6 of the accompanying drawings. In that embodiment, the shift pulse starts a predetermined delay period (T) after the beginning of the one half cycle, ends at the beginning of a momentary omission occurring after the predetermined delay period, starts again the predetermined period (T) after the end of the momentary omission and ends again at the end of the one half cycle.

In this invention, the electric signals which are delivered from a photosensor unit in correspondence with the changes of the quantities of reflected light attendant upon the movement of the spot of the light beam across the track are added and subtracted to detect first and second position signals indicative of the position of the spot on the track, and the half wave greater and the half wave smaller than the arithmetic mean value of the maximum and minimum values of the oscillating waveform of each of first and second position signals are caused to correspond to the single square pulse and the zero output as to each cycle, respectively, whereupon the first and second position signals are respectively converted into first and second shaped position signals delayed for the predetermined time intervals.

## Brief Description of the Drawings:

Fig. 1 is an arrangement diagram showing an embodiment of an optical-disk driving apparatus according to this invention;

Fig. 2 is a block diagram showing the embodiment of Fig. 1 in more detail;

Fig. 3 is a block diagram showing the details of essential portions in Fig. 2;

Fig. 4 is a signal waveform diagram showing the respective signal waveforms of first waveshaping means and second waveshaping means in the case where a first position signal and a second position signal do not involve momentary omissions;

Fig. 5 is a signal waveform diagram showing the respective signal waveforms of the first waveshaping means and the second waveshaping means in the case where the first position signal and the second position signal involve momentary omissions during the delay of a predetermined time;

Fig. 6 is a signal waveform diagram showing the respective signal waveforms of the first waveshaping means and the second waveshaping means in the case where the first position signal and the second position signal involve momentary omissions after the delay of the predetermined time;

Fig. 7 is a block diagram showing the control system of a prior-art optical-disk driving apparatus; and

Fig. 8 is a diagram of the signal waveform of a velocity detection circuit for use in the control system of Fig. 7.

Throughout the drawings, the same symbols indicate identical or equivalent portions.

## Description of the Preferred Embodiments:

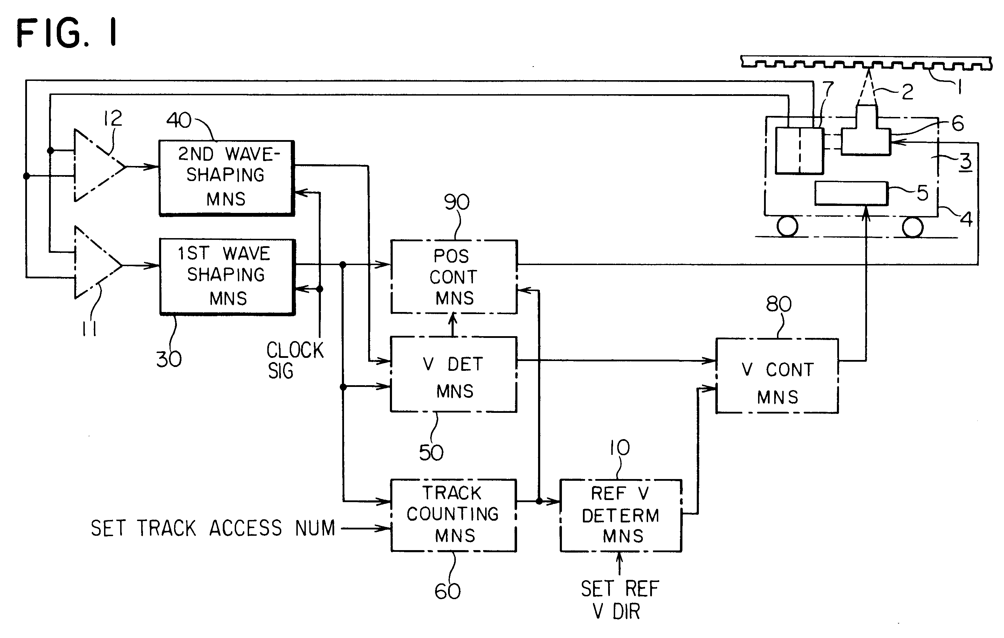

Fig. 1 is an arrangement diagram which shows an embodiment of an optical-disk driving apparatus according to this invention. In Fig. 1, constituents 1 - 7, 11 and 12 are quite the same as in the prior-art apparatus described before. The embodiment further comprises first waveshaping means 30 for causing the positive half wave and negative half wave of a first position signal, which is the difference signal produced by the subtractive amplifier 11, to correspond to a single square pulse and a zero output as to each cycle, respectively, and for converting them into a first shaped position signal delayed for a predetermined time on the basis of a clock signal applied from outside; second waveshaping means 40 for causing the positive half wave and negative half wave of a second position signal, which is the sum signal produced by the additive amplifier 12, to correspond to a single square pulse and a zero output as to each cycle, respectively, and for converting them into a second shaped position signal delayed for the predetermined time on the basis of the clock signal applied from outside; velocity detection means 50 for designating a direction signal indicative of a direction to a velocity signal indicative of a velocity at which the spot of the light beam 2 traverses the track of the optical disk 1, on the basis of the first shaped position signal delivered from the first waveshaping means and the second shaped position signal delivered from the second waveshaping means, thereby to produce the velocity signal with the direction designated; track counting means 60 for counting a number of remaining tracks which the spot of the light beam 2 is to traverse, on the basis of a signal corresponding to a number of tracks to be accessed to a target track as is applied from outside and the first shaped position signal delivered from the first waveshaping means 30, and for producing the count signal; reference velocity determination means 70 for receiving the count signal delivered from the track counting means, to determine and store a reference velocity pattern corresponding to the number of remaining tracks, namely, the number of tracks to be accessed to the target track at first, for designating a direction signal indicative of a moving direction of the spot of the light beam 2 as is applied from outside, to the reference velocity signal successively on the basis of the count signals, and for producing the reference velocity signal with the direction designated; velocity control means 80 for receiving the reference velocity signal of the designated direction delivered from the reference velocity determination means 70 and the velocity signal of the designated direction delivered from the velocity detection means 50, to compare both these signals and to detect a velocity error signal, so as to subject the linear actuator 5 to a velocity control; and position control means 90 for producing a tracking signal when the spot of the light beam 2 has become lower than a predetermined velocity at a predetermined track before the target track, on the basis of the velocity signal delivered from the velocity detection means 50, the count signal delivered from the track counting means 60 and the first shaped position signal delivered from the first waveshaping means 30, so as to subject the tracking actuator 6 to a position control and to stop it with the center of the spot of the light beam 2 held in agreement with the center of the target track.

In this optical-disk driving apparatus, the electric signals which are delivered from the bisected photosensor unit 7 with the movement of the spot of the light beam 2 across the track of the optical disk 1 are subtractively amplified by the subtractive amplifier 11, to detect the first position signal being the difference signal, while they are additively amplified by the additive amplifier 12, to detect the second position signal being the sum signal. Using the first waveshaping means 30 and second waveshaping means 40, the positive and negative half cycles of the oscillating waveforms of the first and second position signals are caused to correspond to the individual square pulses and the zero outputs as to each cycle, respectively, and the first and second position signals are converted into the first and second shaped position signals delayed for the predetermined time on the basis of the external clock signal, respectively. The velocity signal of the designated direction indicating the direction in and the velocity at which the spot of the light beam 2 traverses the track is detected by the velocity detection means 50 on the basis of the first and second shaped position signals. In addition, the count signal indicative of the number of remaining tracks which the spot of the light beam 2 is to traverse is detected by the track counting means 60 on the basis of the first shaped position signal and the externally-applied number of tracks to be accessed to the target track. The reference velocity determination means 70 receives the count signal, to determine and store the reference velocity pattern corresponding to the number of tracks to be accessed to the target track at first, and it designates the externally-applied direction signal indicative of the direction in which the spot of the light beam 2 is to move, to the reference velocity signal successively on the basis of the count signals, whereupon the reference velocity signal of the designated direction is output. The velocity control means 80 receives and compares the reference velocity signal of the designated direction from the reference velocity determination means 70 and the velocity signal of the designated direction from the velocity detection means 50, to detect the velocity error signal and to perform the velocity control of the linear actuator 5. When, under this velocity control, the spot of the light beam 2 has traversed the tracks and has become lower than the predetermined velocity at the predetermined track before the target track, the tracking signal is produced from the position control means 90, and the tracking actuator 6 is subjected to the position control and is stopped in the state in which both the centers of the spot of the light beam 2 and the target track are in agreement.

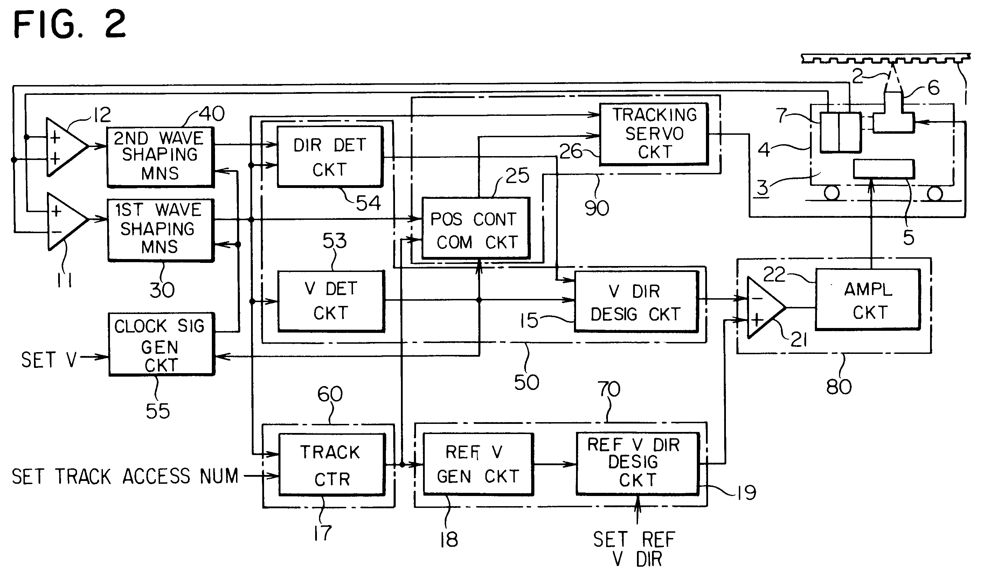

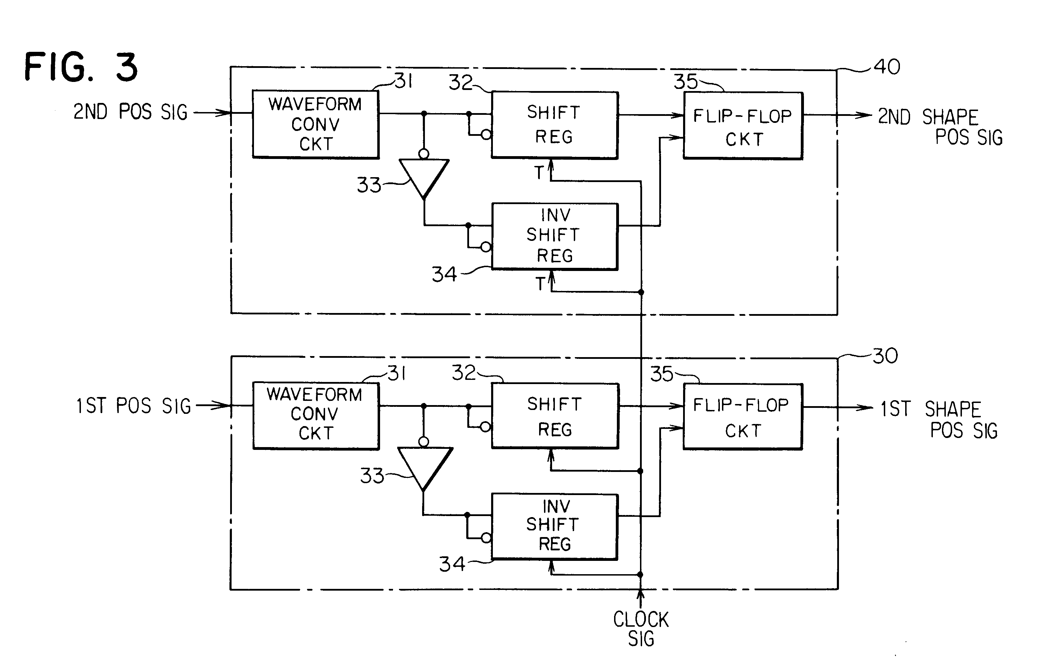

Fig. 2 is a block diagram showing the embodiment of Fig. 1 in more detail, while Fig. 3 is a block diagram showing the details of essential portions in Fig. 2. In Fig. 2, constituents 15, 17 - 19, 21, 22, 25 and 26 are quite the same as in the prior-art apparatus described before. Numeral 53 denotes a velocity detection circuit that detects the velocity signal indicative of the velocity at which the spot of the light beam 2 traverses the track of the optical disk 1, on the basis of the first shaped position signal from the first waveshaping means 30. Numeral 54 denotes a direction detection circuit that detects the direction signal indicative of the direction in which the spot of the light beam 2 moves, on the basis of the first shaped position signal from the first waveshaping means 30 and the second shaped position signal from the second waveshaping means 40 and in view of the phasic relationship of the waveforms of both these signals. Numeral 55 denotes a clock signal generator circuit that compares a velocity setting signal applied from outside and the velocity signal from the velocity detection circuit 53, to produce the clock signal of high frequency when the velocity signal is greater and to produce the clock signal of low frequency when the velocity signal is smaller.

Besides, in Fig. 3, numeral 31 represents a waveform converter circuit which receives the first position signal being the difference signal from the subtractive amplifier 11, and which converts the first position signal into a first position pulse signal wherein the positive half wave and negative half wave of the oscillating waveform of the former signal correspond to the square pulse and the zero output as to each cycle, respectively. Alternatively, the waveform converter circuit 31 receives the second position signal being the sum signal from the additive amplifier 12, and it converts the second position signal into a second position pulse signal wherein the positive half wave and negative half wave of the oscillating waveform of the former signal correspond to the square pulse and the zero output as to each cycle, respectively. Numeral 32 denotes a shift register which receives the first position pulse signal from the waveform converter circuit 31, and which produces a first shift pulse signal that rises with the delay of predetermined time on the basis of the clock signal from the clock signal generator circuit 55 and falls simultaneously with the first position pulse signal. Alternatively, the shift register 32 receives the second position pulse signal from the waveform converter circuit 31, and it produces a second shift pulse signal that rises with the delay of predetermined time on the basis of the clock signal from the clock signal generator circuit 55 and falls simultaneously with the second position pulse signal. Numeral 33 denotes an inverter which receives the first position pulse signal from the waveform converter circuit 31, and which produces a first inverted position pulse signal of inverted polarity. Alternatively, the inverter 33 receives the second position pulse signal from the waveform converter circuit 31, and it produces a second inverted position pulse signal of inverted polarity. Numeral 34 denotes an inverting shift register which receives the first inverted position pulse signal from the inverter 33, and which produces a first inverted shift pulse signal that rises with the delay of predetermined time on the basis of the clock signal from the clock signal generator circuit 55 and falls simultaneously with the first inverted position pulse signal. Alternatively, the inverting shift register 34 receives the second inverted position pulse signal from the inverter 33, and it produces a second inverted shift pulse signal that rises with the delay of predetermined time on the basis of the clock signal from the clock signal generator circuit 55 and falls simultaneously with the second inverted position pulse signal. Numeral 35 represents a flip-flop circuit, and when it is supplied with either one of the first shift pulse signal from the shift register 32 and the first inverted shift pulse signal from the inverting shift register 34, it produces the first shaped position signal wherein the square pulse or the zero output continues until the other of the pulse signals is received next. Alternatively, when the flip-flop circuit 35 is supplied with either one of the second shift pulse signal from the shift register 32 and the second inverted shift pulse signal from the inverting shift register 34, it produces the second shaped position signal wherein the square pulse or the zero output continues until the other of the pulse signals is received next.

Each of the first waveshaping means 30 and the second waveshaping means 40 is configured of the waveform converter circuit 31, shift register 32, inverter 33, inverting shift register 34 and flip-flop circuit 35. Besides, the velocity detection circuit 50 is configured of the velocity detection circuit 53, direction detection circuit 54 and velocity direction designation circuit 15; the track counting means 60 is configured of the track counter 17; the reference velocity determination means 70 is configured of the reference velocity generator circuit 18 and reference velocity direction designation circuit 19; the velocity control means 80 is configured of the velocity error detection circuit 21 and amplifier circuit 22; and the position control means 90 is configured of the position control command circuit 25 and track servo circuit 26.

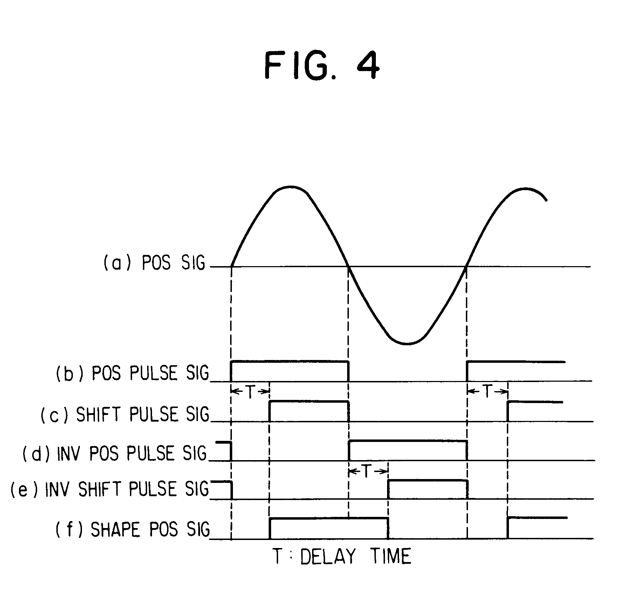

Next, the operation of the above embodiment will be described principally on parts pertinent to this invention and with reference to Figs. 4 - 6. Fig. 4 is a signal waveform diagram showing the respective signal waveforms of the first waveshaping means and second waveshaping means in the case where the first position signal and second position signal do not involve momentary omissions, Fig. 5 is a signal waveform diagram showing the respective signal waveforms of the first waveshaping means and second waveshaping means in the case where the first position signal and second position signal involve momentary omissions which are during the delay of the predetermined time, and Fig. 6 is a signal waveform diagram showing the respective signal waveforms of the first waveshaping means and second waveshaping means in the case where the first position signal and second position signal involve momentary omissions after the delay of the predetermined time.

Initially, the signal which corresponds to the number of the tracks of the optical disk 1 to be accessed to the target track is applied to the track counter 17. Since the track counter 17 does not contain the first shaped position signal from the first waveshaping means 30 at first, it counts this number of the tracks to-be-accessed as the number of remaining tracks and produces the count signal corresponding thereto. Upon receiving this count signal, the reference velocity generator circuit 18 determines and stores the reference velocity pattern and produces the first reference velocity signal thereof. The reference velocity direction designation circuit 19 receives this reference velocity signal, and it produces the reference velocity signal with the direction designated by the externally-applied direction signal indicative of the direction in which the spot of the light beam 2 is to move. Since the velocity error detection circuit 21 does not contain the velocity signal of the designated direction from the velocity direction designation circuit 15 at first, it produces this reference velocity signal of the designated direction as the velocity error signal. This velocity error signal is amplified by the amplifier circuit 22 so as to perform the velocity control of the linear actuator 5. When, under the velocity control, the spot of the light beam 2 traverses the track, the bisected photosensor unit 7 senses the changes of the quantities of reflected light from the optical disk 1 attendant upon the traversing movement and produces the electric signals corresponding thereto. The subtractive amplifier 11 receives the electric signals and performs the subtractive amplification to produce the first position signal being the difference signal, while the additive amplifier 12 receives the same electric signals and performs the additive amplification to produce the second position signal being the sum signal. The waveform converter circuit 31 receives the first position signal or the second position signal, and in the absence of the momentary omission in the first position signal or the second position signal (refer to (a) in Fig. 4), it produces the first position pulse signal or the second position pulse signal (refer to (b) in Fig. 4) in which the positive half wave and the negative half wave correspond to the square pulse and the zero output as to each cycle, respectively. The shift register 32 receives the first position pulse signal or the second position pulse signal, and it produces the first shift pulse signal or the second shift pulse signal (refer to (c) in Fig. 4) which rises with the delay of the predetermined time (T) on the basis of the clock signal from the clock signal generator circuit 55 and which falls simultaneously with the first position pulse signal or the second position pulse signal, respectively. Besides, the inverter 33 receives the first position pulse signal or the second position pulse signal from the waveform converter circuit 31 and produces the first inverted position pulse signal or second inverted position pulse signal of inverted polarity (refer to (d) in Fig. 4). The inverting shift register 34 receives the first inverted position pulse signal or the second inverted position pulse signal from the inverter 33, and it produces the first inverted shift pulse signal or the second inverted shift pulse signal (refer to (e) in Fig. 4) which rises with the delay of the predetermined time (T) on the basis of the clock signal from the clock signal generator circuit 55 and which falls simultaneously with the first inverted position pulse signal or the second inverted position pulse signal, respectively. When the flip-flop circuit 35 receives the square pulse of the first shift pulse signal or the second shift pulse signal from the shift register 32 by way of example, it produces the first shaped position signal or the second shaped position signal in which the square pulse rises simultaneously with the reception and continues until the square pulse of the first inverted shift pulse signal or the second inverted shift pulse signal is subsequently received from the inverting shift register 34, respectively.

Next, when the first position signal or the second position signal which the waveform converter circuit 31 receives involves the momentary omission (refer to (a) in Fig. 5 or (a) in Fig. 6), the first position pulse signal or second position pulse signal (refer to (b) in Fig. 5 or (b) in Fig. 6) which has a momentary omission at the same point of time is produced. In the case where the point of time of the occurrence of the momentary omission lies within the delay of the predetermined time (T), upon receiving the first position pulse signal or second position pulse signal which involves the momentary omission, the shift register 32 produces the first shift pulse signal or second shift pulse signal (refer to (c) in Fig. 5) that rises with the delay of the predetermined time (T) since the point of time at which the position pulse signal rises again subsequently to the momentary omission, on the basis of the clock signal from the clock generator circuit 55, and that falls simultanesouly with the first position pulse signal or second position pulse signal, respectively. In addition, the inverter 33 receives the first position pulse signal or second position pulse signal having the momentary omission from the waveform converter circuit 31 and produces the first inverted position pulse signal or second inverted position pulse signal of inverted polarity (refer to (d) in Fig. 5). The inverting shift register 34 receives the first inverted position pulse signal or the second inverted position pulse signal from the inverter 33, and it produces the first inverted shift pulse signal or second inverted shift pulse signal (refer to (e) in Fig. 5) which rises with the delay of the predetermined time (T) on the basis of the clock signal from the clock signal generator circuit 55 and which falls simultaneously with the first inverted position pulse signal or second inverted position pulse signal, respectively. The square pulse of the first shift pulse signal or second shift pulse signal in this case is shorter than the first inverted shift pulse signal or second inverted shift pulse signal by a time interval which lapses since the square pulse of the first position pulse signal or second position pulse signal rises until it rises again after the occurrence of the momentary omission, respectively. The flip-flop circuit 35 alternately receives the first shift pulse signal or second shift pulse signal from the shift register 32 and the first inverted shift pulse signal or second inverted shift pulse signal from the inverting shift register 34, and produces the first shaped position signal or second shaped position signal having no momentary omission (refer to (f) in Fig. 5). Here, for the above reason, the square pulse of the first shaped position signal or second shaped position signal corresponding respectively to the square pulse of the first position pulse signal or second position pulse signal becomes shorter than that corresponding to the first inverted position pulse signal or second inverted position pulse signal.

Next, in the case where the point of time of the occurrence of the momentary omission is later than the delay of the predetermined time (T), upon receiving the first position pulse signal or second position pulse signal which involves the momentary omission, the shift register 32 produces the first shift pulse signal or second shift pulse signal (refer to (c) in Fig. 6) which rises with the delay of the predetermined time (T) likewise to the case of the absence of the momentary omission, falls at the point of time of the occurrence of the momentary omission and rises again with the delay of the predetermined time (T) since the point of time of the finish of the momentary omission and which falls simultaneously with the first position pulse signal or second position pulse signal, respectively. Besides, the inverter 33 receives the first position pulse signal or second position pulse signal having the momentary omission from the waveform converter circuit 31 and produces the first inverted position pulse signal or second inverted position pulse signal of inverted polarity (refer to (d) in Fig. 6). The inverting shift register 34 receives the first inverted position pulse signal or second inverted position pulse signal from the inverter 33, and it produces the first inverted shift pulse signal or second inverted shift pulse signal (refer to (e) in Fig. 6) which rises with the delay of the predetermined time (T) on the basis of the clock signal from the clock signal generator circuit 55 and which falls simultaneously with the first inverted position pulse signal or second inverted position pulse signal, respectively. The square pulse of the first shift pulse signal or second shift pulse signal in this case is separated into two parts. However, even when the flip-flop circuit 35 is supplied from the shift register 32 with the two separated parts of the square pulse of the first shift pulse signal or second shift pulse signal, it produces the first shaped position signal or second shaped position signal (refer to (f) in Fig. 6) formed of a single square pulse which continues until the square pulse of the first inverted shift pulse signal or second inverted shift pulse signal is subsequently received from the inverting shift register 34, respectively. This is the same as in the case where the first position signal or second position signal does not involve the momentary omission. The velocity detection circuit 53 receives the first shaped position signal and detects the velocity signal from the period of the received signal, and it delivers a substantially accurate velocity signal even if the first position signal produced by the subtractive amplifier 11 involves the momentary omission. Besides, the direction detection circuit 54 detects the direction signal on the basis of the first and second shaped position signals and in view of the phasic relationship thereof. Further, the track counter 17 produces the count signal precisely indicating the number of remaining tracks to the target track on the basis of the first shaped position signal and in accordance with the square pulse thereof. Since the subsequent operations of the optical-disk driving apparatus are the same as in the case of the prior art apparatus, they shall be omitted here.

In the above embodiment, the clock signal generator circuit 55 compares the velocity signal from the velocity detection circuit 53 and the velocity setting signal externally applied, and it produces the clock signal of high frequency when the velocity signal is greater than the velocity setting signal and the clock signal of low frequency when the velocity signal is smaller than the velocity setting signal. Besides, in the embodiment, the velocity detection circuit 53 and the track counter 17 receive the first shaped position signal produced by the first waveshaping means 30, but to achieve the intended purpose, it is also necessary that they receive the second shaped position signal produced by the second waveshaping means 40. Further, the shift register 32 and the inverting shift register 34 selectively receive the two clock signals of the unequal frequencies from the clock signal generator circuit 55, it is needless to say that they may well receive clock signals of frequencies other than the above in accordance with the moving velocity of the spot of the light beam 2.

As described above, this invention consists in an optical-disk driving apparatus wherein a tracking actuator furnished with a condensing lens, which forms a spot of a light beam on tracks provided on a surface of a rotating disk and which permits the spot to traverse the tracks in a predetermined number, and a photosensor unit which senses quantities of reflected light of the light beam from the disk surface and which converts them into electric signals, are mounted on a carriage; the carriage is driven by a linear actuator, to move the spot of the light beam in a direction of traversing the tracks and to detect a first position signal and a second position signal indicative of a position of the spot on the tracks through addition and subtraction of the electric signals corresponding to changes of the quantities of the reflected light attendant upon the movement; while a velocity signal at the movement of the spot across the track as detected on the basis of both the signals and a reference velocity signal previously determined by a number of tracks to be accessed to a target track as externally applied are being compared successively by receiving the first position signals, the linear actuator is subjected to a velocity control; and when the moving velocity of the spot has become lower than a predetermined velocity at a predetermined track before the target track, the tracking actuator is subjected to a position control, thereby to position the spot to the target track; the apparatus comprising first waveshaping means for causing a half wave greater and a half wave smaller than an arithmetic mean value of maximum and minimum values of an oscillating waveform of said first position signal to correspond to a single square pulse and a zero output as to each cycle, respectively, and for converting them into a first shaped position signal delayed for a predetermined time, and second waveshaping means for causing a half wave greater and a half wave smaller than an arithmetic mean value of maximum and minimum values of an oscillating waveform of said second position signal to correspond to a single square pulse and a zero output as to each cycle, respectively, and for converting them into a second shaped position signal delayed for a predetermined time. Therefore, the invention brings forth the effect that even if information recorded in the form of a pit on a track or a defect on a track or between tracks causes momentary omissions in the first position signal and the second position signal at the time of the movement of the spot of the light beam across the track or tracks of the optical disk, an accurate number of remaining tracks is counted, while a more accurate velocity signal is detected, whereby the spot of the light beam can be efficiently positioned to the target track.

## Claims

1. A control system for an optical-disk drive apparatus, the system comprising means (6) for forming a spot (2) of light on an optical disk (1), means for generating electrical signals in dependence upon light reflected from the optical disk (1), means for producing a position signal indicative of the position of the spot (2) in relation to tracks of the optical disk (1), means for adjusting the position of the spot (2) in dependence upon the position signal and a reference signal, and means for generating a single pulse signal representative of the presence of a track, characterised in that waveshaping means (30, 40) is provided, comprising means (31-35):

(a) to produce, during one half cycle of the position signal, a shift pulse starting either a predetermined delay period (T) after the beginning of the one half cycle or a predetermined delay period after any momentary omission which occurs in the predetermined delay period from the beginning of the one half cycle, said shift pulse ending at the end of the one half cycle;

(b) to produce an inverted shift pulse starting at the end of the predetermined delay period from the beginning of the next half cycle following said one half cycle, and ending at the end of the next half cycle; and

(c) to produce said shaped pulse position signals respectively starting from the beginning of said shift pulse and ending at the beginning of said inverted shift pulse, regardless of any momentary omission which occurs in the position signal during the one half cycle.

2. A control system according to claim 1, wherein the waveshaping means (30, 40) comprises a waveform converter circuit (31), an inverter (33), a pair of shift registers (32, 34) and a flip-flop (35).

3. An optical-disk driving apparatus comprising a control system according to any preceding claim and wherein a tracking actuator (3) is furnished with a condensing lens, which forms the spot of a light beam (2) on the tracks provided at predetermined intervals on a surface of the optical disk (6) and which permits the spot to traverse the tracks in a predetermined number, and a photosensor unit (7) which senses quantities of reflected light of the light beam from the disk surface and which converts them into said electrical signals, are mounted on a carriage (4); the carriage being driven by a linear actuator (5), to move the spot in a direction of traversing the tracks and to detect a first position signal and a second position signal indicative of a position of the spot on the tracks through addition and subtraction of the electric signals corresponding to changes of the quantities of the reflected light attendant upon the movement; while a velocity signal at the movement of the spot across the track as detected on the basis of both the signals and a reference velocity signal previously determined by a number of tracks to be accessed to a target track as externally applied are being compared successively by receiving the first position signals, the linear actuator (5) being subjected to a velocity control; and when the moving velocity of the spot (2) has become lower than a predetermined velocity at a predetermined track before the target track, the tracking actuator (5) is subjected to a position control, thereby to position the spot to the target track; and wherein one of said waveshaping means (30, 40) is adapted to produce a half wave greater and a half wave smaller than an arithmetic mean value of maximum and minimum values of an oscillating waveform of said first position signal to correspond to a single square pulse and a zero output as to each cycle, respectively, and to convert them into said first shaped pulse position signals, and the other of said waveshaping means (30, 40) is adapted to produce a half wave greater and a half wave smaller than an arithmetic mean value of maximum and minimum values of an oscillating waveform of said second position signal to correspond to a single square pulse and a zero output as to each cycle, respectively, and to convert them into said second shaped pulse position signal.

4. An optical-disk driving apparatus as defined in claim 3, wherein in said one of the waveshaping means (30, 40) of said waveform converter circuit (31) is connected to convert the first position signal into a first position pulse signal in which the half wave greater and the half wave smaller than the arithmetic mean value of the maximum and minimum values of the oscillating waveform of said first position signal correspond to the square pulse and the zero output as to each cycle, respectively, said shift register (32) being connected to receive the first position pulse signal and producing a first shift pulse which rises with the delay of the predetermined time on the basis of a clock signal from a clock signal generator (55) circuit disposed outside and which falls simultaneously with said first position pulse signal, said inverter (33) being connected to receive said first position pulse signal to produce a first inverted position pulse of inverted polarity, said shift register (34) being connected to receive the first inverted position pulse signal to produce a first inverted shift pulse which rises with the delay of the predetermined time on the basis of the clock signal from said clock signal generator circuit and which falls simultaneously with said first inverted position pulse signal, and said flip-flop (33) being connected to produce the first shaped pulse position signal in which, in response to an input of either one of the first shift pulse and the first inverted shift pulse, the square pulse or the zero output, continues until the other of the pulse signals is received next.

5. An optical-disk driving apparatus as defined in claim 3, wherein in the other of the waveshaping means (30, 40), said waveform converter circuit (31) is connected to convert the second position signal into a second position pulse signal in which the half wave greater and the half wave smaller than the arithmetic mean value of the maximum and minimum values of the oscillating waveform of said second position signal correspond to the square pulse and the zero output as to each cycle, respectively, said shift register (32) being connected to receive the second position pulse signal and producing a second shift pulse which rises with the delay of the predetermined time on the basis of a clock signal from a clock signal generator circuit (55) disposed outside and which falls simultaneously with said second position pulse signal, said inverter (33) being connected to receive said second position pulse signal to produce a second inverted position pulse of inverted polarity, said shift register (34) being connected to receive the second inverted position pulse signal to produce a second inverted shift pulse which rises with the delay of the predetermined time on the basis of the clock signal from said clock signal generator circuit and which falls simultaneously with said second inverted position pulse signal, and said flip-flop (33) being connected to produce the second shaped pulse position signal in which, in response to an input of either one of the second shift pulse and the second inverted shift pulse, the square pulse or the zero output continues until the other of the pulse signals is received next.

6. An optical-disk driving apparatus as defined in claim 4 or claim 5, wherein said clock signal generator circuit (55) compares the velocity signal at the movement of the spot of the light beam across the track and a velocity setting signal is applied and set from outside, and it selectively produces the clock signal of high frequency when the velocity signal is greater than the velocity setting signal and the clock signal of low frequency when the former is smaller than the latter.

**Patentansprüche**

1. Steuersystem für ein Bildplattenlaufwerk, wobei das System folgendes aufweist:
   - eine Einrichtung (6), um einen Lichtfleck (2) auf einer Bildplatte (1) zu bilden;
   - eine Einrichtung, um elektrische Signale in Abhängigkeit von Licht zu erzeugen, das von der Bildplatte (1) reflektiert wird;
- eine Einrichtung, um ein Positionssignal zu erzeugen, das die Position des Flecks (2) relativ zu Spuren der Bildplatte (1) bezeichnet;
- eine Einrichtung, um die Position des Flecks (2) in Abhängigkeit von dem Positionssignal und einem Bezugssignal einzustellen; und
- eine Einrichtung, um ein Einzelimpulssignal zu erzeugen, das das Vorhandensein einer Spur bezeichnet,

dadurch gekennzeichnet,

daß Wellenformungseinrichtungen (30, 40) vorgesehen sind, die Einrichtungen (31-35) aufweisen:

(a) um während einer Halbperiode des Positionssignals einen Verschiebeimpuls zu erzeugen, der entweder eine vorbestimmte Verzögerungsperiode (T) nach dem Beginn der einen Halbperiode oder eine vorbestimmte Verzögerungsperiode nach jeder momentanen Auslassung beginnt, die in der vorbestimmten Verzögerungsperiode seit dem Beginn der einen Halbperiode auftritt, wobei der Verschiebeimpuls am Ende der einen Halbperiode endet;

(b) um einen invertierten Verschiebeimpuls zu erzeugen, der am Ende der vorbestimmten Verzögerungsperiode seit dem Beginn der nächsten Halbperiode, die auf die genannte eine Halbperiode folgt, beginnt und am Ende der nächsten Halbperiode endet; und

(c) um die geformten Impuls-Positionssignale zu erzeugen, die jeweils am Beginn des Verschiebeimpulses beginnen und am Beginn des invertierten Verschiebeimpulses enden, und zwar ungeachtet irgendeiner momentanen Auslassung, die in dem Positionssignal während der einen Halbperiode auftritt.

2. Steuersystem nach Anspruch 1,
wobei die Wellenformungseinrichtungen (30, 40) eine wellenform-Umwandlungsschaltung (31), einen Inverter (33), ein Paar von Schieberegistern (32, 34) und ein Flipflop (35) aufweisen.

3. Bildplattenlaufwerk, das ein Steuersystem nach einem der vorhergehenden Ansprüche aufweist und bei dem eine Spurfolge-Stelleinheit (3) mit einer Kondensorlinse, die den Fleck eines Lichtstrahls (2) auf den Spuren bildet, die in vorbestimmten Abständen auf einer Oberfläche der Bildplatte (6) vorgesehen sind, und die es zuläßt, daß der Fleck sich über eine vorbestimmte Anzahl der Spuren bewegt, und eine Fotosensoreinheit (7), die Mengen des von der Plattenoberfläche reflektierten Lichts des Lichtstrahls abtastet und sie in elektrische Signale umwandelt, auf einem Wagen (4) angeordnet sind;

- wobei der Wagen von einer Linear-Stelleinheit (5) angetrieben wird, um den Fleck in einer Richtung zu bewegen, in der er die Spuren überquert, und um ein erstes Positionssignal und ein zweites Positionssignal zu detektieren, die eine Position des Flecks auf den Spuren bezeichnen, und zwar durch Addition und Subtraktion der elektrischen Signale, die Änderungen der Mengen des reflektierten Lichts infolge der Bewegung entsprechen; während ein Geschwindigkeitssignal bei der Bewegung des Flecks quer über die Spur gemäß der Erfassung auf der Basis der beiden Signale und ein extern zugeführtes Bezugs-Geschwindigkeitssignal, das zuvor bestimmt wurde durch eine Anzahl von Spuren, die zu einer Zielspur zu queren sind, durch den Empfang der ersten Positionssignale nacheinander verglichen werden, wobei die Linear-Stelleinheit (5) einer Geschwindigkeitssteuerung unterworfen wird; und wobei dann, wenn die Bewegungsgeschwindigkeit des Flecks (2) an einer vorbestimmten Spur vor der Zielspur niedriger als eine vorbestimmte Geschwindigkeit geworden ist, die Spurfolgestelleinheit (3) einer Positionssteuerung unterworfen wird, um dadurch den Fleck auf der Zielspur zu positionieren; und

- wobei die eine der Wellenformungseinrichtungen (30, 40) ausgebildet ist, um eine Halbwelle zu erzeugen, die größer, und eine Halbwelle zu erzeugen, die kleiner als ein arithmetischer Mittelwert des Maximal- und des Minimalwerts einer schwingenden Wellenform des ersten Positionssignals ist, um einem einzelnen Rechteckimpuls bzw. einem Ausgangssignal Null in bezug auf jede Periode zu entsprechen und um sie in die ersten geformten Impuls-Positionssignale umzuwandeln, und die andere der Wellenformungseinrichtungen (30, 40) ausgebildet ist, um eine Halbwelle zu erzeugen, die größer, und eine Halbwelle zu erzeugen, die kleiner als ein arithmetischer Mittelwert des Maximal- und des Minimalwerts einer schwingenden Wellenform des zweiten Positionssignals ist, um einem einzelnen Rechteckimpuls bzw. einem Ausgangssignal Null in bezug auf jede Periode zu entsprechen und um sie in das zweite geformte Impuls-Positionssignal umzuwandeln.

4.  Bildplattenlaufwerk nach Anspruch 3, wobei

- in der einen der Wellenformungseinrichtungen (30, 40) die Wellenform-Umwandlungsschaltung (31) angeschlossen ist, um das erste Positionssignal in ein ersten Positionsimpulssignal umzuwandeln, bei dem die Halbwelle, die größer, und die Halbwelle, die kleiner als der arithmetische Mittelwert des Maximal- und des Minimalwerts der schwingenden Wellenform des ersten Positionssignals ist, dem Rechteckimpuls bzw. dem Ausgangssignal Null in bezug auf jede Periode entsprechen,

- das Schieberegister (32) angeschlossen ist, um das erste Positionsimpulssignal zu empfangen und einen ersten Verschiebeimpuls zu erzeugen, der mit der Verzögerung der vorbestimmten Zeit auf der Basis eines Taktsignals von einem extern angeordneten Taktsignalgenerator (55) ansteigt und gleichzeitig mit dem ersten Positionsimpulssignal abfällt, der Inverter (33) angeschlossen ist, um das erste Positionsimpulssignal zu empfangen, um einen ersten invertierten Positionsimpuls umgekehrter Polarität zu erzeugen,

- das Schieberegister (34) angeschlossen ist, um das erste invertierte Positionsimpulssignal zu empfangen, um einen ersten invertierten Verschiebeimpuls zu erzeugen, der mit der Verzögerung der vorbestimmten Zeit auf der Basis des Taktsignals von dem Taktsignalgenerator ansteigt und gleichzeitig mit dem ersten invertierten Positionsimpulssignal abfällt, und

- das Flipflop (35) angeschlossen ist, um das erste geformte Impuls-Positionssignal zu erzeugen, bei dem in Abhängigkeit von einer Eingabe entweder des ersten Verschiebeimpulses oder des ersten invertierten Verschiebeimpulses entweder der Rechteckimpuls oder das Ausgangssignal Null fortbesteht, bis das andere der Impulssignale als nächstes empfangen wird.

5.  Bildplattenlaufwerk nach Anspruch 3, wobei

- in der anderen der Wellenformungseinrichtungen (30, 40) die Wellenform-Umwandlungsschaltung (31) angeschlossen ist, um das zweite Positionssignal in ein zweites Positionsimpulssignal umzuwandeln, bei dem die Halbwelle, die größer, und die Halbwelle, die kleiner als der arithmetische Mittelwert des Maximal- und des Minimalwerts der schwingenden Wellenform des zweiten Positionssignals ist, dem Rechteckimpuls bzw. dem Ausgangssignal Null in bezug auf jede Periode entsprechen,

- das Schieberegister (32) angeschlossen ist, um das zweite Positionsimpulssignal zu empfangen und einen zweiten Verschiebeimpuls zu erzeugen, der mit der Verzögerung der vorbestimmten Zeit auf der Basis eines Taktsignals von einem extern angeordneten Taktsignalgenerator (55) ansteigt und gleichzeitig mit dem zweiten Positionsimpulssignal abfällt, der Inverter (33) angeschlossen ist, um das zweite Positionsimpulssignal zu empfangen, um einen zweiten invertierten Positionsimpuls umgekehrter Polarität zu erzeugen,

- das Schieberegister (34) angeschlossen ist, um das zweite invertierte Positionsimpulssignal zu empfangen, um einen zweiten invertierten Verschiebeimpuls zu erzeugen, der mit der Verzögerung der vorbestimmten Zeit auf der Basis des Taktsignals von dem Taktsignalgenerator ansteigt und gleichzeitig mit dem zweiten invertierten Positionsimpulssignal abfällt, und

- das Flipflop (35) angeschlossen ist, um das zweite geformte Impuls-Positionssignal zu erzeugen, bei dem in Abhängigkeit von einer Eingabe entweder des zweiten Verschiebeimpulses oder des zweiten invertierten Verschiebeimpulses entweder der Reohteckimpuls oder das Ausgangssignal Null fortbesteht, bis das andere der Impulssignale als nächstes empfangen wird.

6.  Bildplattenlaufwerk nach Anspruch 4 oder Anspruch 5, wobei der Taktsignalgenerator (55) das Geschwindigkeitssignal bei der Bewegung des Flecks des Lichtstrahls über die Spur mit einem Geschwindigkeitsvorgabesignal Vergleicht, das von außen zugeführt und vorgegeben wird, und selektiv das Taktsignal hoher Frequenz erzeugt, wenn das Geschwindigkeitssignal größer als das Geschwindigkeitsvorgabesignal ist, und das Taktsignal niedriger Frequenz erzeugt, wenn das erstere kleiner als das letztere ist.

## Revendications

1. Système de commande pour un appareil pour l'entraînement de disques optiques, le système comprenant des moyens (6) pour former un spot lumineux (2) sur un disque optique (1), des moyens pour produire des signaux électriques en fonction de la lumière réfléchie par le disque optique (1), des moyens pour produire un signal de position indiquant la position du spot (2) relativement aux pistes du disque optique (1), des moyens pour régler la position du spot (2) en fonction du signal de position et d'un signal de référence, et des moyens pour produire un seul signal d'impulsion représentatif de la présence d'une piste, caractérisé en ce que des moyens de mise en forme d'onde (30, 40) sont prévus, comprenant des moyens (31-35) :

(a) pour produire, durant un demi-cycle du signal de position, une impulsion de décalage démarrant soit une période de retard (T) prédéterminée après le début du demi-cycle ou une période de retard prédéterminée après toute omission momentanée qui se produit dans la période de retard prédéterminée depuis le début du demi-cycle, ladite impulsion de décalage se terminant à la fin du demi-cycle;

(b) pour produire une impulsion de décalage inversée débutant à la fin de la période de délai prédéterminée, à partir du début du prochain demi-cycle suivant ledit demi-cycle, et se terminant à la fin du prochain demi-cycle; et

(c) pour produire lesdits signaux de position d'impulsion mis en forme commençant respectivement depuis le début de ladite impulsion de décalage et se terminant au début de ladite impulsion de décalage inversée, indifféremment de toute omission momentanée qui se produit dans le signal de position pendant le demi-cycle.

2. Système de commande selon la revendication 1, dans lequel les moyens de mise en forme d'onde (30, 40) comprennent un circuit convertisseur de forme d'onde (31), un onduleur (33), une paire de registres à décalage (32, 34) et une bascule (35).

3. Appareil pour l'entraînement de disques optiques, comprenant un système de commande selon l'une des revendications précédentes, et dans lequel un actionneur de poursuite (3) est équipé d'une lentille de champ qui forme le spot d'un faisceau lumineux (2) sur les pistes prévues à des intervalles prédéterminés sur une surface du disque optique (6) et qui permet au spot de traverser les pistes dans un nombre prédéterminé, et une unité formant photodétecteur (7) qui capte les quantités de lumière réfléchie du faisceau lumineux depuis la surface du disque et les convertit en lesdits signaux électriques, sont montés sur un chariot (4); le chariot étant entraîné par un actionneur linéaire (5) pour déplacer le spot dans une direction traversant les pistes et pour détecter un premier signal de position et un deuxième signal de position indiquant une position du spot sur les pistes par addition et soustraction des signaux électriques correspondant aux changements des quantités de lumière réfléchie à la suite du mouvement; tandis qu'un signal de vitesse au mouvement du spot à travers la piste, comme détecté sur la base des deux signaux et un signal de vitesse de référence déterminé précédemment par un nombre de pistes à accéder vers une piste cible comme appliquée extérieurement, sont comparés successivement en recevant les premiers signaux de position, l'actionneur linéaire (5) étant soumis à un contrôle de vitesse; et lorsque la vitesse de mouvement du spot (2) est devenue inférieure à une vitesse prédéterminée à une piste prédéterminée avant la piste cible, l'actionneur de poursuite (5) est soumis à un contrôle de position, en positionnant ainsi le spot par rapport à la piste cible; et dans lequel l'un desdits moyens de mise en forme d'onde (30, 40) est apte à produire une demi-onde plus grande et une demi-onde plus petite qu'une valeur moyenne arithmétique des valeurs maximum et minimum d'une forme d'onde oscillante dudit premier signal de position pour correspondre à une seule impulsion carrée et une sortie zéro dans chaque cycle, respectivement, et pour les convertir en lesdits premiers signaux de position d'impulsion mis en forme, et l'autre desdits moyens de mise en forme d'onde (30, 40) est apte à produire une demi-onde plus grande et une demi-onde plus petite qu'une valeur moyenne arithmétique de valeurs maximum et minimum d'une forme d'onde oscillante dudit deuxième signal de position pour correspondre à une seule impulsion carrée et une sortie zéro pour chaque cycle, respectivement, et pour les convertir en lesdits deuxièmes signaux de position d'impulsion mis en forme.

4. Un appareil pour l'entraînement de disques optiques, comme défini dans la revendication 3, dans lequel dans l'un desdits moyens de mise en forme d'onde (30, 40), ledit circuit convertisseur de forme d'onde (31) est relié pour convertir le premier signal de position en un premier signal d'impulsion de position, dans lequel la d'emi-onde plus grande et la demi-onde plus petite que la valeur moyenne arithmétique des valeurs maximum et minium de la forme d'onde oscillante dudit premier signal de position, correspond à l'impulsion carrée et à la sortie zéro dans chaque cycle, respectivement, ledit registre à décalage (32) étant relié afin de recevoir le premier signal d'impulsion de position et de produire une première impulsion de décalage qui s'élève avec le retard du temps prédéterminé sur la base d'un signal d'horloge provenant d'un circuit générateur de signaux d'horloge (55) disposé à l'extérieur et qui chute simultanément avec ledit premier signal d'impulsion de position, ledit onduleur (33) étant relié afin de recevoir ledit premier signal d'impulsion de position pour produire une première impulsion de position inversée de polarité inversée, ledit registre à décalage (34) étant relié afin de recevoir le premier signal d'impulsion de position inversée pour produire une première impulsion de décalage inversée qui s'élève avec le retard du temps prédéterminé sur la base du signal d'horloge provenant dudit circuit générateur de signaux d'horloge et qui chute simultanément avec ledit premier signal d'impulsion de position inversée, et ladite bascule (33) étant reliée afin de produire un premier signal de position d'impulsion mis en forme dans lequel, en réponse à une entrée soit de la première impulsion de décalage soit de la première impulsion de décalage inversée, l'impulsion carrée ou la sortie zéro, continue jusqu'à ce que l'autre des signaux d'impulsion est reçu ensuite.

5. Un appareil pour l'entraînement de disques optiques, comme défini dans la revendication 3, dans lequel dans l'autre des moyens de mise en forme d'onde (30, 40), ledit circuit convertisseur de forme d'onde (31) est relié pour convertir le deuxième signal de position en un deuxième signal d'impulsion de position dans lequel la demi-onde plus grande et la demi-onde plus petite que la valeur moyenne arithmétique des valeurs maximum et minimum de la forme d'onde oscillante dudit deuxième signal de position, correspond à l'impulsion carrée et à la sortie zéro dans chaque cycle, respectivement, ledit registre à décalage (32) étant relié afin de recevoir le deuxième signal d'impulsion de position et produire une deuxième impulsion de décalage qui s'élève avec le retard du temps prédéterminé sur la base d'un signal d'horloge provenant d'un circuit générateur de signaux d'horloge (55) disposé à l'extérieur et qui chute simultanément avec ledit deuxième signal d'impulsion de position, ledit onduleur (33) étant relié afin de recevoir ledit deuxième signal d'impulsion de position pour produire une deuxième impulsion de position inversée de polarité inversée, ledit registre à décalage (34) étant relié afin de recevoir le deuxième signal d'impulsion de position inversée pour produire une deuxième impulsion de décalage inversée qui s'élève avec le retard du temps prédéterminé sur la base d'un signal d'horloge, provenant dudit circuit générateur de signaux d'horloge et qui chute simultanément avec ledit deuxième signal d'impulsion de position inversée, et ladite bascule (33) étant reliée afin de produire le deuxième signal de position d'impulsion mis en forme dans lequel, en réponse à une entrée soit d'une deuxième impulsion de décalage soit d'une deuxième impulsion de décalage inversée, l'impulsion carrée ou la sortie zéro continue jusqu'à ce que l'autre des signaux d'impulsions est reçu ensuite.

6. Un appareil pour l'entraînement de disques optiques selon la revendication 4 ou la revendication 5, dans lequel ledit circuit générateur de signaux d'horloge (55) compare le signal de vitesse au mouvement du spot du faisceau lumineux à travers la piste et un signal de réglage de vitesse est appliqué et réglé depuis l'extérieur, et il produit sélectivement le signal d'horloge de haute fréquence lorsque le signal de vitesse est plus grand que le signal de réglage de vitesse et le signal d'horloge de basse fréquence lorsque ce dernier est plus petit que celui-ci.

15

# FIG. 1

2ND WAVE-SHAPING MNS

1ST WAVE SHAPING MNS

POS CONT MNS

V DET MNS

TRACK COUNTING MNS

REF V DETERM MNS

V CONT MNS

CLOCK SIG

SET TRACK ACCESS NUM

SET REF V DIR

12

40

11

30

90

50

60

10

80

7

2

1

6

3

5

4

16

EP 0 274 420 B1

# FIG. 2

EP 0 274 420 B1

# FIG. 3

# FIG. 4

(a) POS SIG

(b) POS PULSE SIG

(c) SHIFT PULSE SIG

(d) INV POS PULSE SIG

(e) INV SHIFT PULSE SIG

(f) SHAPE POS SIG

T : DELAY TIME

# FIG. 5

(a) POS SIG

(b) POS PULSE SIG

(c) SHIFT PULSE SIG

(d) INV POS PULSE SIG

(e) INV SHIFT PULSE SIG

(f) SHAPE POS SIG

T: DELAY TIME

# FIG. 6

(a) POS SIG

(b) POS PULSE SIG

(c) SHIFT PULSE SIG

(d) INV POS PULSE SIG

(e) INV SHIFT PULSE SIG

(f) SHAPE POS SIG

T: DELAY TIME

20

FIG. 7  PRIOR ART

# FIG. 8  PRIOR ART

(a) SUM SIG FROM ADD AMPL (2ND POS SIG)

(b) DIFF SIG FROM SUBTR AMPL (1ST POS SIG)

(c) PULSE SIG FROM PULSE GEN CKT

(d) V SIG FROM V DET CKT

TIME OF
MOMENTARY
OMISSION

V SIG IN THE ABSENCE
OF MOMENTARY OMISSION

EP 0 274 420 B1